Europäisches Patentamt

(19) European Patent Office    (11) Publication number:    **0 050 106**

Office européen des brevets    **A1**

(12)    **EUROPEAN PATENT APPLICATION**

(21) Application number: **81850185.0**    (51) Int. Cl.³: **B 01 D 53/14**
                                                  **B 01 D 53/00**
(22) Date of filing: **13.10.81**

(30) Priority: **13.10.80 SE 8007158**    (71) Applicant: **Weitman, Jacob**
                                              **Tryffelstigen 8**
                                              **S-611 63 Nyköping(SE)**

(43) Date of publication of application:
   **21.04.82 Bulletin 82/16**    (72) Inventor: **Weitman, Jacob**
                                      **Tryffelstigen 8**
                                      **S-611 63 Nyköping(SE)**

(84) Designated Contracting States:
   **FR GB IT**    (74) Representative: **Lettström, Richard et al,**
                       **Aktiebolaget Dahls Patentbyra Sturegatan 4**
                       **S-114 35 Stockholm(SE)**

(54) **Method and apparatus for the separation of preferably gaseous and difficultly condensable contaminations from a gas.**

(57) A method is defined in which preferably difficultly condensable contaminations, for example dissolvent vapours, are separated from a gas. According to the invention said gas is sprayed (5) in a scrubber (3) with an atomized washing liquid consisting of a mixture of water and such a separable emulgator as has molecules with a hydrophile end and a hydrophobe end, said gas is carried through said scrubber and a drop separation (10) in which said mixture of water and emulgator, and the difficultly condensable contaminations are separated, and thereafter the mixture of water and emulgator, and the difficultly condensable contaminations are separated (4) dependent on the ability to separate of the emulgator.

This is obtained by on one hand the hydrophile end of the emulgator has a stronger bound than the hydrophobe in which case the water and the emulgator after the separation are substantially separated from the difficultly condensable contaminations, or on the other hand the hydrophobe end of the emulgator has a stronger bound than the hydrophile end in which case the emulgator and the difficultly condensable contaminations after said separation are substantially separated from the water.

The invention relates also to an apparatus to accomplish said method.

./...

## Method and apparatus for the separation of preferably gaseous and difficultly condensable contaminations from a gas

The invention is related to a method and an apparatus for the separation of preferably gaseous and difficultly condensable contaminations as dissolvent vapours from a gas in practice often air so completely that said gas can be evacuated or possibly re-used without any environment problems occurring.

In many industry processes great flows of air are produced which on one hand can be strongly heated and on the other hand can include contaminations of different kinds. As a typical example lacquering plants for drying or hardening lacquers can be mentioned where great amounts of dissolvents are exhausted to the air flow which often heated is used to dry or harden the lacquer. The size of said amounts of dissolvents can be evident from the fact that very few hardening lacquers have a dry content (does of course not concern powder lacquers) exceeding about 60% which consequently means that at least 40% of the consumed weight amount of the lacquer is emitted as a dissolvent vapour when said lacquer is hardened or dried. When it comes to air dried lacquers the dry content can be as low as 20-30%, and therefore the amount of dissolvent becomes greater in a corresponding degree.

Relating to the lacquering drying or hardening ovens are often used in which the lacquer is dried or hardened at a raised temperature often up to 100°C. Since used dissolvents are difficultly condensable no or unsufficient separation is attained by condensing if the temperature is lowered and heat recovering is carried out. Therefore, great amounts of dissolvent have earlier been evacuated to the atmosphere with environment problems as a consequence thereof.

In other types of industry processes the consumed and often heated outlet air includes both easily and difficultly condensable contaminations. The easily condensable contaminations have often in the condensated state such characteristics that they become difficult to handle in one or another way. For example, they can have great adhesive capacity and high viscosity, whereby complicated contamination problems arise in the equipment in which the contaminated outlet air is handled. Possible heat recovery and cleaning of the air become hereby extremely hard. If the outlet air moreover includes difficultly condensable contaminations the problem does of course not become less.

An object of this invention is therefore to provide a method and an apparatus for the separation of difficultly condensable contaminations from a gas, in practice often air, which method permits a considerable and a continuous separation and is not effected of other contaminations of a more easily condensable nature which are included in the gas.

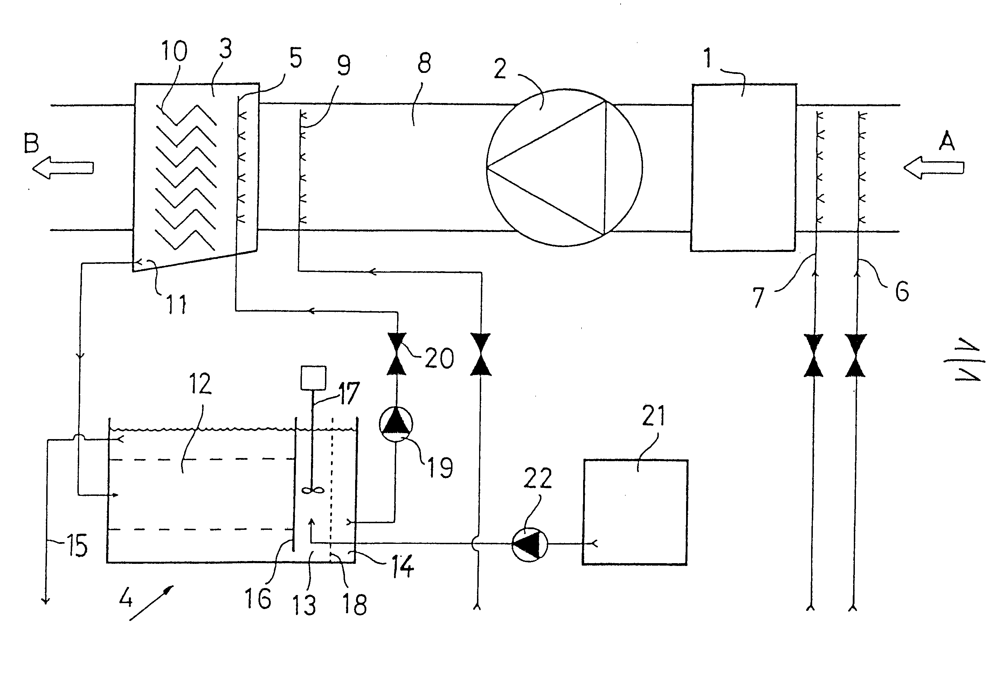

The invention is now to be described with reference to the accompanying drawing which shows schematically an example on an apparatus to accomplish the method according to the invention.

The apparatus shown in the drawing has an inlet A for contaminated gas, in practice often air, and an outlet B for cleaned gas. Further the apparatus has a first cleaning step in the form of a condensing separator 1, the object of which is to reduce the load on the following cleaning steps, a fan 2 and a second cleaning step in the form of a scrubber 3 with an injection device or spray 5 and a drop separator 10.

In the given example the device is intended to clean air which in the heated state at A includes both easily condensable contamination and perhaps contaminations which are difficult to handle in condensated and cold states and difficultly condensable as dissolvent vapours.

The separation step 1 can be of a special construction which permits both heat recovery (the air at A can have a temperature over 100°C) and separation of easily condensable contaminations which in the cold state can have both high viscosity and adhesion, and cleaning and removal during operation of separated contaminations. The detail shaping of this condensation separator is not an object of this invention and is described in the Swedish patent application 8006390-2.

The fan 2 is intended to compensate the flow losses which arise in the apparatus and accordingly gives the air the desired flow speed.

The scrubber 3 is meant for separation of the difficultly condensable contaminations in the air by means of a washing liquid which is injected by the injection device 5 the composition and function of which is to be described below.

From the scrubber 3 the washing liquid and the contaminations bound thereto are led to the separator device 4. This device has the double task to at one embodiment on one hand separate an additional component, usually a suitable emulgator, together with the contamination bound thereto from the basical component of the washing liquid, which basical component usually is water, and on the other hand recondition the washing liquid, i.a. by the addition of a new emulgator.

The apparatus described above operates in the following manner.

The air supplied at A has a high temperature, e.g. of the order of 125°C, and includes on one hand easily condensable contaminations as resins, plastics softeners etc., and on the other hand difficultly condensable contaminations as vapours of paraffin, ligroin, gasoline etc. In the combined separator and heat recovery unit 1 the temperature of the air is lowered so that the easily condensable contaminations are precipitated and stay in the separator 1, wherefrom they thereafter are derived, preferably during operation. In certain situations it can be suitable with yet greater rapidity and to the price of decreased heat recovery by means of an injection device 6 to inject atomized water, whereby the separation in the separator 1 is improved. To further improve the separation or to make the cleaning of the separator easier an injection device 7 built in the condensing separator 1 according to the above-mentioned Swedish patent application can also be used to inject an additional agent or chemicals (e.g. dissolvents to clean the separator if the cleaning device built in the same in especially difficult operation situations should not be enough).

At the outlet of the separator 1 the temperatur of the air has been lowered greatly and the content of the borne easily condensable contaminations is reduced. The air has now, possibly with increased relative humidity, substantially only the difficultly condensable contamination left and the excess heat thereof is taken care of. The fan 2 in this condition drives the air forwardly with a suitable flow speed through the channel 8.

If the air by the water injection by means of the injection device 6 and by the temperature lowering in the separator 1 has not obtained 100% relative humidity in the channel 8 a fourth injection device 9 is used to inject atomized water in such an amount that desired humidity is achieved or substantially achieved. Thereafter, the air flows into the scrubber 3. When the air obtains a relative humidity at about 100% the load on the scrubber is reduced by reducing the evaporation.

Via the injection device 5 in the scrubber 3 an extremely atomized mist of a washing liquid consisting of water in which an emulgator with special features is mixed, is injected, preferably in counter-flow relatively the air. Hereby, so called helical nozzles are conveniently used which are self-cleaning and which give the washing liquid its required atomization. By injecting the washing liquid in counter-flow, an effective admixture into the air is obtained at the same time as the contact time of the washing liquid with the air is increased. Thereafter, the mixture of air and atomized washing liquid flow into an insert 10 in the scrubber 3. The insert operates in two ways simultaneously, viz. both as contact phase enlarging device to increase the contact phase between the washing liquid and the air, and as a drop separator to separate such drops as flow with the

4

air and have bound contaminations. The drop separator is formed so that it separates injected washing liquid by providing a turbulence in the flow so that a fusion of the particles of the washing liquid which are atomized to aerosol form occurs, and so these particles are deposited on the insert and by means of the influence of gravitation flows down to the lower part of the drop separator and the outlet 11 thereof. During this flow the phases of the insert will also be totally wet by means of the washing liquid, whereby the contact surface thereof with the air is enlarged further (in practice the insert can often represent a total area of 50-200 m$^2$).

The washing liquid collected in the lower part of the scrubber 3 includes contaminations bound by the emulgator thereof and is derived to the separator device 4. The separator device comprises an inlet part 12, a mixture part 13 and an outlet part 14. The inlet part has a proportionally great volume and is so formed that laminar flow is prevailed therein, whereby the emulgator with the contaminations bound thereto are separated from the water. This will further require certain special features by the emulgator and also that the inlet part has so great volume that the duration therein is at least as long as the time which is required for the separation of the water/emulgator mixture and the contaminations bound thereto.

At the separation of the emulgator/water mixture the lighter phase will, i.e. the emulgator together with the contaminations bound thereto, rise upwardly to the upper part of the inlet part 12, wherefrom they are separated via an exhaust 15. The heavier phase, in this case the water, sinks to the bottom of the inlet part and passes under a shield formed partition 16 into the mixture part where a new emulgator is added during agitation by means of the mixer 17 so that a new washing liquid is produced. At another embodiment of the invention an emulgator is used which has such a degree of separation that substantially the difficultly condensable contaminations are separated via the exhaust 15 and a great deal of the emulgator follows the water to the mixture part 17, whereby a less part new emulgator can be added. The mixture part 17 is separated from the outlet part 14 via a filter 18 the object of which is to take up possible solid contaminations. From the outlet part 14 the washing liquid is pumped back to the injection device 5 by means of a pump 19, said flow being controlled by means of a valve 20. New emulgator is supplied from a tank 21 by means of a pump 22.

It is in the beginning of this description presupposed that the difficultly condensable contaminations substantially was petroleum products such as legroin, paraffin, gasoline or renoline a.s.o. This will of course influe the choice of emulgator.

5

To function well in the described separation method the separation shall have molecules with a hydrophile end and a hydrophobe end. Hereby, it is important that the hydrophobe end has a greater tendency to be bound to the actual contaminations than what is the case with the hydrophile end to the water. In another case the emulgator and the separated contaminations will not be able to be separated from the water. Moreover, it is important that the emulgator is not too hydrophile, since in this case the separation of the emulsion would take too long time without adding any chemicals, for example an electrolyte. Such additional chemicals should make it impossible to re-circulate the water. An emulgator which occurs in this way is preferably an mixing emulgator with anionical and cationical materials and is really not water soluble. Further, it is of course important that the selected emulgator does not bring any affect on people or environment. As an example on an emulgator which shows those features one can be mentioned, which is sold under trade name Berol 798.

When the emulgator from the tank 21 is mixed into the mixture part 13 water during the influence of the mixer 17 forms a silting up of emulgator drops into the water. Hereby, the interface between the emulgator drops and water will be situated on hydrophile members of the emulgator molecules which project from the emulgator drops, said emulgator molecules will be silted up or will the mixture be atomized to a next to aerosol formed mist, will extend into or at least be bound to the face of the water drops which thereby are formed, while the hydrophobe molecule parts will extend out from the water drops as capture arms for the dissolvent molecules.

With the preparate mentioned above a very good separation is achieved of said type of contaminations at the same time as the mixture of water/emulgator/contamination is separated on approximately 1-2 hours so totally that the water phase in the inlet part of the separator part 4 only has a content of 100 ppm or less of the contamination.

As has been mentioned above you can use an emulgator with another degree of separation, i.e. an emulgator which hydrophile end has stronger

6

separation than the mentioned above at the same time as the hydrophobe end has a somewhat less expressed tendency to be bound to the actual contamination, however not such a weak bounding tendency that the separation will be considerably influenced. At the use of such an emulgator the breaking of contaminations/emulgator/water mixture instead would occur between the contamination and the emulgator, whereby the water/emulgator mixture directly should be re-circulated and the separated contamination is separated in a liquid phase.

## CLAIMS

1.      A method for the separation of preferably difficultly condensable contaminations, e.g. dissolvents, from a gas, characterized in that in a scrubber said gas is sprayed with an atomized washing liquid consisting of a mixture of water and such a separable emulgator as has molecules with a hydrophile end and a hydrophobe end, that said gas is carried through the scrubber and a drop separator in which the mixture of water and emulgator, and the difficultly condensable contaminations are separated from each other, and that thereafter the mixture of water and emulgator, and the difficultly condensable contaminations are separated dependent on the ability to separate of the emulgator.

2.      A method according to claim 1, characterized in that the hydrophile end of the emulgator has a stronger bound than the hydrophobe end, said water and emulgator after separation being substantially separated from the difficultly condensable contaminations.

3.      A method according to claim 1, characterized in that the hydrophobe end of the emulgator has a stronger bound than the hydrophile end, said emulgator and said difficultly condensable contaminations after said separation being substantially separated from the water.

4.      A method according to claim 1 or 2, characterized in that said gas when being sprayed with the mixture of water and emulgator has a relative humidity of about 100%.

5.      A method according to claim 1-4, characterized in that said gas before said spraying of the mixture of water and emulgator first is cooled in a condensing separator to remove easily condensable contaminations.

6.      A method according to claim 4, characterized in that water also is supplied before the gas arrives into said condensing separator.

7.      A method according to claim 5 or 6, characterized in that vapour or dissolvents are supplied by means of a cleaning device to clean the condensing separator during operation.

8.      An apparatus to accomplish the method according to claim 1-7 for the separation of preferably difficultly condensable contaminations, e.g. dissolvent vapours, from gas, characterized in that said device comprises a scrubber (3) in which the gas is sprayed with such a separable emulgator that has molecules with a hydrophile end and a hydrophobe end, a drop separator (10) to separate the mixture of emulgator and water, and the difficultly condensable contaminations, and a separation plant (4) to which after said separation in said drop separator the mixture of water and emulgator, and the difficultly condensable contaminations are carried, whereby after separation in said separation plant washing liquid is re-circulated to said scrubber.

9.          An apparatus according to claim 8, characterized in that said separation plant (4) consists of a tank with three apartments, viz. a separator part (12) which on the upper part is provided with an outlet to derive said contaminations, a mixture part (13) to mix emulgator and water, and a re-circulation part (14) to recondition washing liquid and re-circulate the same to said scrubber (3), said separator part and said mixture part being separated by means of a shield (16) which at the bottom of the tank forms a gap which is open to said mixture part, said mixture part and said re-circulation part being separated by means of a previously known filter (18) to the separation of solid particles.

0050106

## European Patent Office

## EUROPEAN SEARCH REPORT

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | DE - B - 1 051 247 (BAYER) <br> * Figures; column 2, line 41 to column 4, line 6; column 4, line 52 to line 63 * <br><br> -- | 1,5,8 | B 01 D 53/14 <br> 53/00 |
| A | US - A - 3 889 390 (R.J. KLARE) | | |
| A | DE - B - 1 095 448 (VETROCOKE) <br><br> ---- | | |
| | | | **TECHNICAL FIELDS SEARCHED (Int.Cl. 3)** <br><br> B 01 D 53/00 |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 15-01-1982 | BOGAERTS |

EPO Form 1503.1  06.78